# EUROPÄISCHE PATENTSCHRIFT

(11) **EP 1 393 139 B1**
(45) Veröffentlichungstag und Bekanntmachung des Hinweises auf die Patenterteilung: **29.07.2009**
(21) Anmeldenummer: 02745099.8
(22) Anmeldetag: 28.05.2002
(51) Int. Cl.: G05B 19/05, G05B 19/042

(54) **PROGRAMMIERWERKZEUG UND VERFAHREN ZUR ERSTELLUNG VON PROGRAMMEN, INSBESONDERE DER AUTOMATISIERUNGSTECHNIK**
PROGRAMMING TOOL AND METHOD FOR CREATING PROGRAMS, PARTICULARLY FOR USE IN AUTOMATION TECHNOLOGY
OUTIL DE PROGRAMMATION ET PROCEDE D'ELABORATION DE PROGRAMMES, RELEVANT NOTAMMENT DE LA TECHNIQUE D'AUTOMATISATION

(30) Priorität: 01.06.2001 DE 10126863
(43) Veröffentlichungstag der Anmeldung: 03.03.2004
(73) Patentinhaber: SIEMENS AKTIENGESELLSCHAFT, 80333 München (DE)
(72) Erfinder: BIEHLER, Georg, 90453 Nürnberg (DE); DIEZEL, Matthias, 90462 Nürnberg (DE); GIMPL-WIEGERS, Christine, 92353 Postbauer-Heng (DE); HÖFLER, Werner, 90542 Eckental (DE); LANGE, Ronald, 90768 Fürth (DE); MUNOZ IBARRA, Pablo, 91058 Erlangen (DE); OTTO, Hans-Peter, 91058 Erlangen (DE)
(86) Internationale Anmeldenummer: PCT/DE2002/001960
(87) Internationale Veröffentlichungsnummer: WO 2002/099548

(56) Entgegenhaltungen:
- EP-A- 0 331 060
- EP-A- 0 707 248
- WO-A-00/72097
- WO-A-97/03389
- DE-U- 29 710 751
- NEIDERT R P ET AL: "A NEW PARADIGM FOR INDUSTRIAL CONTROL SYSTEM DESIGN" ISA TRANSACTIONS, INSTRUMENT SOCIETY OF AMERICA. PITTSBURGH, US, Bd. 32, Nr. 3, 1. Oktober 1993 (1993-10-01), Seiten 225-233, XP000404386 ISSN: 0019-0578

## Beschreibung

Die Erfindung betrifft ein Programmierwerkzeug zur Erstellung und/oder Visualisierung von Programmen gemäß dem Oberbegriff des Anspruchs 1. Darüber hinaus betrifft die Erfindung ein Verfahren zur Programmierung und Darstellung eines Programmlaufs zur Steuerung und/oder Regelung eines vorzugsweise technischen Prozesses gemäß dem Oberbegriff des Anspruchs 11.

Ein solches Programmierwerkzeug zur Erstellung und/oder Visualisierung von Programmen zur Steuerung des Ablaufs eines technischen Prozesses mittels einer grafischen Sprachapplikation zum Ablauf in einem speicherprogrammierbaren Steuergerät zur gleichzeitigen Darstellung eines zeitlichen Ablaufs und einer Interaktion der an der Steuerung des vorzugsweise technischen Prozesses beteiligten Objekte in einem Diagramm auf einer Anzeigevorrichtung ist bereits aus der EP 0 707 248 A1 der Anmelderin vorbekannt.

Dabei werden bei diesem vorbekannten Programmierwerkzeug zur Erstellung eines Gesamtprogramms eine Vielzahl von grafischen Objekten anwendungsabhängig miteinander in Wechselbeziehung gebracht und jedem grafischen Objekt des Gesamtprogramms ein anwendungsabhängig ausgewähltes Programmattribut zugeordnet. Aus dem Gesamtprogramm werden dann anwendungsabhängig diejenigen grafischen Objekte, welche bestimmungsgemäße Programmattribute aufweisen, zu Teilprogrammen repräsentierenden, aktivier- bzw. deaktivierbaren "Sichten" zusammengefasst.

Im Zusammenhang mit der Lösung von einfachen oder komplexen Automatisierungsaufgaben werden speicherprogrammierbare Steuergeräte eingesetzt, in denen anhand eines vorbestimmten Programmablaufs der Prozess abgebildet und gesteuert bzw. geregelt wird. Hierzu wird die zu lösende Automatisierungsaufgabe in Objekte bzw. Funktionsbausteine unterteilt. Diese Objekte oder Funktionsbausteine müssen nicht notwendig den Bauteilen des technischen Prozesses entsprechen. Dies kann jedoch ein sinnvoller Ansatz sein, um die Automatisierungsaufgabe einer programmtechnischen Lösung zuzuführen. Dabei müssen die Programmmodule ebenso wie die beteiligten realen Komponenten miteinander über Schnittstellen interagieren. Genauso wie bei den realen Komponenten hat der jeweilige Hersteller von Programmmodulen nicht den konkreten Anwendungsfall, sondern eine allgemeine Problemlösung im Auge. Die Schnittstellen derartiger Programmmodule sind somit stets allgemein und nicht auf den jeweiligen Anwendungsfall ausgelegt. Anders ausgedrückt, genauso wenig wie die Bauteile einer Baugruppe zunächst die anderen Elemente der Baugruppe kennen, genauso wenig kennen die Programmmodule die anderen beteiligten Programmmodule, so dass in der Regel eine Anpassung aller Programmmodule an den jeweiligen Anwendungsfall erforderlich ist.

Im Zusammenhang mit komplexeren Lösungen können derartige Aufgaben mit textuellen Programmiersprachen nur aufwendig bewältigt werden. Aus diesem Grunde werden in der Automatisierungstechnik seit vielen Jahren erfolgreich grafische Sprachapplikationen wie etwa Kontaktplan (KOP) oder Funktionsplan (FUP) eingesetzt. Dabei handelt es sich z. B. um aus der Elektrotechnik bekannte grafische Darstellungen komplexer Vorgänge. Hierbei haben sich insbesondere die bekannten Bausteindiagramme, Flussdiagramme oder auch die aus der Regelungstechnik bekannten Schaltbilder eingebürgert. Es lassen sich nahezu alle technischen Prozesse durch derartige Schaubilder darstellen und im Wege von grafischen Sprachapplikationen auch implementieren. Dabei sind in der Regel den Bauteilen, also den Objekten der Programme, wiederum einzelne Programmmodule zugeordnet, die durch entsprechende Befehle miteinander verknüpft werden. In der Regel übernimmt ein Compiler die semantisch korrekte Abstimmung des mittels einer grafischen Sprachapplikation erstellten Programmlaufs.

Sämtlichen vorstehenden Darstellungen ist das Problem gemeinsam, dass entweder nur der zeitliche Ablauf des Programms oder nur die beteiligten Objekte bzw. deren Aktionen ersichtlich sind. Somit kann in der Regel anhand des Studiums der Programmsyntax die Lösung der Regelungs- oder Automatisierungsaufgabe nur schwer nachvollzogen oder gar überwacht werden. Insbesondere ist dies erst nach aufwendigen Querprüfungen möglich. Ein Echtzeitmonitoring oder gar eine Fehlersuche kann hierdurch erschwert sein.

Der Erfindung liegt daher die Aufgabe zugrunde, eine neuartige Sprachapplikation zu schaffen, die einen erhöhten Bedienkomfort und eine bessere Übersichtlichkeit zur Erstellung von Programmen, insbesondere der Automatisierungstechnik, bietet und hierdurch weitere Vorteile bei der Überwachung von laufenden Prozessen eröffnet.

Diese Aufgabe wird mittels eines Programmierwerkzeugs gemäß Anspruch 1 und eines Verfahrens nach Anspruch 11 gelöst. Vorteilhafte Ausgestaltungen der Erfindung ergeben sich aus den abhängigen Ansprüchen 2 bis 10.

Dem erfindungsgemäßen Programmierwerkzeug gemäß Hauptanspruch liegt die Grundidee zugrunde, ein zusätzliches Koordinierungselement vorzusehen, das den zeitlichen Ablauf und die Objektinteraktionen verwaltet. Hierdurch können die Objekte und deren Interaktionen vorteilhaft miteinander in einer grafischen Sprachapplikation verbunden werden, ohne dass deren genaue Abstimmung zum Zeitpunkt der Programmierung eine Rolle spielt. Dieses zusätzliche Koordinierungselement ermöglicht den Einsatz einer neuartigen grafischen Sprachapplikation, die in einem gemeinsamen Diagramm sowohl den zeitlichen Ablauf als auch die Interaktion der an dem jeweiligen technischen Prozess beteiligten Objekte auf einer Anzeigevorrichtung erlaubt. Dabei ist das zusätzliche Koordinierungselement zwar hard- und/oder softwaretechnisch vorhanden, aber nicht in der grafischen Sprachapplikation sichtbar. Eine derartige Darstellung ist weder erforderlich noch sinnvoll, da der Erfindung die Aufgabe zugrunde liegt, die Übersichtlichkeit der Darstellung zu verbessern. Dies bietet erhebliche Vorteile bei der Programmierung wie auch bei der Überwachung von technischen Prozessen, wie sie insbesondere in Verbindung mit speicherprogrammierbaren Steuergeräten benötigt werden.

Das Koordinierungselement kann als virtueller oder realer zusätzlicher Prozessor in Verbindung mit dem oder den speicherprogrammierbaren Steuergerät oder -geräten realisiert sein. Im Falle der Realisierung als virtueller Prozessor stellt das Koordinierungselement ein entsprechendes Softwaremodul dar.

Das Koordinierungselement nimmt zumindest im Wesentlichen alle Objektaufrufe entgegen und bestimmt den Zeitpunkt und den Adressaten der Weiterleitung der Aufrufe an das jeweils betroffene Objekt.

Um eine möglichst universelle Einsetzbarkeit der neuartigen grafischen Sprachapplikation zu erreichen, ist für sämtliche Objekte eines technischen Prozesses eine grafische Darstellung vorgesehen. Dies gilt auch für sämtliche zur Lösung der Automatisierungsaufgabe benötigten Objektinteraktionen. Die vorstehenden Objekte und Objektinteraktionen können zum Zwecke der Implementierung mittels eines Editors aufgerufen und miteinander verschaltet werden.

Realiter ist die Anordnung der Objekte und Objektinteraktionen mit Hilfe eines Editors als Verschaltung von vorzugsweise in Maschinensprache realisierten Programmmodulen zu verstehen.

In vorteilhafter Ausgestaltung werden im Rahmen der erfindungsgemäßen grafischen Sprachapplikationen weitere vorteilhafte Objektinteraktionen wie etwa eine Verzweigung der Objektaufrufe, eine Parallelschaltung von Objektaufrufen, deren Synchronisation oder Rekursionen realisiert.

Eine neuartige grafische Sprachapplikation wird besonders vorteilhaft in Verbindung mit einer Anzeigevorrichtung eingesetzt, die das Programm derart darstellt, dass die Objektinteraktionen bzw. die Objekte in der X-Achse und der zeitliche Ablauf der Objektinteraktionen in der Y-Achse vorzugsweise von oben nach unten dargestellt sind. Die Darstellung eines zeitlichen Programmablaufs von oben nach unten entspricht auch der heutigen Praxis des Monitoring.

Die kompakte Programmierung und Darstellung von technischen Prozessen und deren Programmierung im Wege der neuartigen grafischen Sprachapplikation kann insbesondere zu Überwachungszwecken vorteilhaft genutzt werden. Hierzu ist die Sprachapplikation in Echtzeit baufähig und darstellbar.

Für den Fall, dass die Automatisierungsaufgabe derart komplex oder schnell abläuft, dass die Darstellung vom Benutzer nicht mehr erfasst werden kann, ist in vorteilhafter Ausgestaltung die Anzeigevorrichtung mit einem Pufferspeicher versehen, der eine gepufferte Darstellung des Ablaufs erlaubt. Dieser Pufferspeicher kann überdies auch zur Fehlersuche oder im Zusammenhang mit einem Prozesshalt benutzt werden.

Für die gemeinsame Darstellung der Objekte, deren Interaktionen und des zeitlichen Ablaufs der Interaktionen hat sich insbesondere die Darstellung als Sequence-Chart als vorteilhaft herausgestellt.

Die Lösung der erfindungsgemäßen Aufgabe gelingt gemäß Anspruch 11 auch mittels eines Verfahrens zur Erstellung von Programmen, insbesondere für speicherprogrammierbare Steuergeräte.

Bei diesem Verfahren werden die Vorteile der neuartigen grafischen Sprachapplikation zur Erstellung von Programmen genutzt.

Bei diesem Verfahren wird eine Darstellung derart gewählt, dass die Objekte und deren Interaktionen in der X-Achse und deren zeitliche Abfolge in der Y-Achse aber jeweils in einer gemeinsamen Darstellung zusammengefasst sind.

Nachstehend wird die Erfindung anhand eines in der Zeichnung nur schematisch dargestellten Ausführungsbeispiels näher erläutert. Es zeigen:
- Figur 1: die Objekte eines technischen Prozesses in einer Bausteindarstellung,
- Figur 2: ein Blockschaltbild zur Interaktion der in Figur 1 gezeigten Objekte,
- Figur 3: eine programmtechnische Schaltung der Objekte in einer erfindungsgemäßen Sequence-Chart-Darstellung und
- Figur 4: eine allgemeine Darstellung in Sequence-Charts mit weiteren Objektinteraktionen.

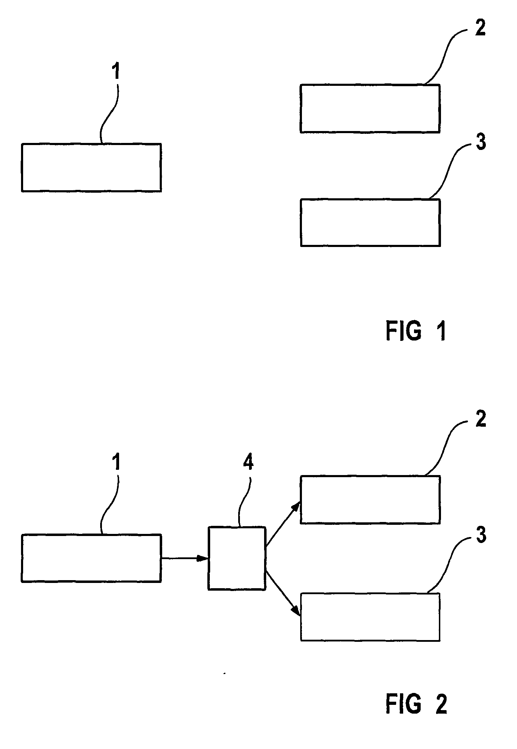

Figur 1 zeigt in einem Blockschaltbild eine einfache Automatisierungsaufgabe, wie sie aus der Programmierung eines programmierbaren Steuergerätes, das in der Zeichnung nicht weiter dargestellt ist, gelöst werden muss. In dem hier skizzierten Beispiel bedient eine Maschine 1 ein erstes und ein zweites Förderband 2 und 3. Schon in technologischer Hinsicht stellt sich dabei oft das Problem, dass die Maschine und die Förderbänder von unterschiedlichen Herstellern stammen. Insofern darf nicht selbstverständlich davon ausgegangen werden, dass die Schnittstellen der an dem technischen Prozess beteiligten Elemente aufeinander abgestimmt sind. Dies ist zunächst auch sinnvoll, weil der beteiligte Hersteller an einer möglichst universellen Einsetzbarkeit der von ihm hergestellten Geräte interessiert ist.

Dieses Problem schlägt sich auch in der programmtechnischen Lösung der in diesem Zusammenhang interessierenden Automatisierungsaufgabe nieder. In einfachster Ausgestaltung können sowohl die Maschine 1 wie auch das erste und zweite Förderband 2 und 3 als beteiligte Objekte einer Sprachapplikation verbunden werden. Die Sprachapplikation stellt eine anwendungsspezifische Programmiersprache zur Lösung der Automatisierungsaufgabe dar. Durch die Sprachapplikation werden die beteiligten Objekte durch entsprechende Funktionen bzw. Objektinteraktionen miteinander verknüpft und in einen sinnvollen zeitlichen Ablauf gestellt. Hierunter ist zu verstehen, dass bei der programmtechnischen Realisierung jeder Output der Maschine 1 den Förderbändern (2 und 3) zugestellt werden muss.

Dies bedeutet, ein Erzeugnis der Maschine 1 muss entweder dem ersten Förderband 2 oder dem zweiten Förderband 3 zugeleitet werden und von diesem zu einem definierten Zeitpunkt wegbefördert werden. Die Fertigstellung des wegzufördernden Produktes durch die Maschine 1 muss somit dem Förderband 2 und 3 bekannt gemacht werden und eines von beiden zur Abholung des Produktes aktiviert werden.

In einfachster Ausgestaltung schlägt sich dies durch entsprechende Aktivierung der Objekte durch ein Programm nieder. Realistischer ist hingegen die Annahme, dass eine komplexe Maschine bzw. ein Förderband durch eine Vielzahl von Objekten programmtechnisch abgebildet ist. Es versteht sich von selbst, dass derart komplexe Vorgänge schnell unübersichtlich werden, was sich in einer entsprechenden Unübersichtlichkeit der Programme niederschlagen kann. Insbesondere hat sich gezeigt, dass rein textuelle Programmiersprachen keine geeignete Wiedergabe derart komplexer Programme darstellen. In der Automatisierungstechnik haben sich daher grafische Sprachapplikationen wie etwa Kontaktplan (KOP) oder Funktionsplan (FUP) durchgesetzt.

Im Wesentlichen wird bei derartigen grafischen Sprachapplikationen ein komplexer technischer Prozess beispielsweise in aus der Regelungstechnik bekannten Blockschaltb41dern wiedergegeben. Blockschaltbilder haben den Vorteil, dass komplexe Prozesse in einem einzigen zusammenhängenden Bild darstellbar sind. Das Problem derartiger Blockschaltbilder besteht darin, dass diese keinerlei Aussage über den tatsächlichen zeitlichen Verlauf des Prozesses enthalten. Dieses Problem wird mittels einer Darstellung in so genannten Flussdiagrammen gelöst, wobei in einer Rangfolge von oben nach unten die einzelnen Aktionen dargestellt sind. Üblicherweise sind in Flussdiagrammen nur die Aktionen aber nicht die Objekte des Prozesses erkennbar, so dass in den Float-Charts keinerlei Information über die Objektinteraktion enthalten ist.

Der Erfindung liegt die Erkenntnis zugrunde, dass tatsächlich oder virtuell zur Realisierung einer gleichzeitigen Darstellung der Objekte, deren Interaktion und wiederum deren zeitliche Abfolge ein übergeordnetes Koordinierungselement 4 vorgesehen sein muss, das zum einen die Adressierung der Objekte untereinander wie auch deren zeitliche Abfolge organisiert. Dies bedeutet, dass im Wesentlichen sämtliche Meldungen und Aufrufe eines Objektes zunächst an das Koordinierungselement 4 übermittelt werden, da das Koordinierungselement 4 anhand des Aufrufs über sonstige Parameter erkennt, welches Objekt aufgrund dieses Aufrufs zu adressieren und aufzurufen bzw. zu aktivieren ist. Das Koordinierungselement 4 ist darüber hinaus so implementiert, dass es auch die zeitliche Abfolge der Objektinteraktionen organisiert. Im vorliegenden Beispiel kann es sich bei dem Koordinierungselement 4 um einen Multiplexer handeln. Im Zusammenhang mit einem oder mehreren speicherprogrammierbaren Steuergerät oder -geräten kann das Koordinierungselement 4 durch einen zusätzlichen Prozessor oder durch ein entsprechendes Softwaremodul realisiert sein.

Dabei gelangt das Koordinierungselement 4 als solches nicht zur Anzeige.

Die sich hieraus ergebende Verschaltung der Objekte 1, 2 und 3 ist in Figur 2 dargestellt.

Gemäß Figur 2 meldet die Maschine 1 sämtliche Fertigmeldungen an ein Koordinierungselement 4, das anhand von Parameterabfragen wie beispielsweise dem Messergebnis einer Waage entscheidet, ob nun Förderband 2 oder 3 zu aktivieren ist. Darüber hinaus erhält das Koordinierungselement 4 auch etwaige Betriebsmeldungen der Förderbänder 2 und 3, so dass das Koordinierungselement 4 auch "entscheiden" kann, ob zum aktuellen Zeitpunkt überhaupt eine Aktivierung des Förderbands 2 oder 3 möglich ist. Dies ist nur ein mögliches Kriterium, das zu einer zeitlichen Organisation des Ablaufs führen kann. Dabei dient die Darstellung in Figur 2 nur zum erleichterten Verständnis.

Die Darstellung in Figur 2 stellt ein übliches Blockschaltbild ohne jede zeitliche Information dar. Sie ist daher nicht zu einer Programmierung oder Überwachung im erfindungsgemäßen Sinne geeignet.

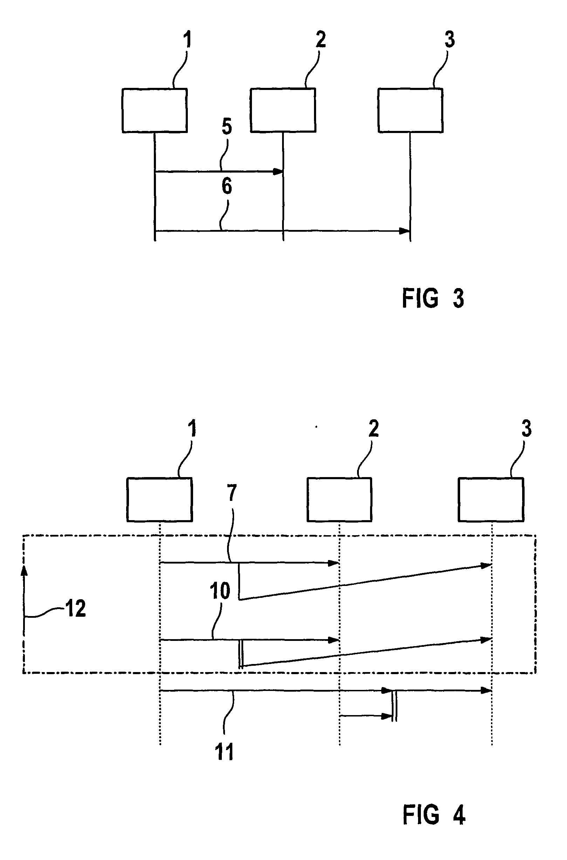

Hierzu dient die aus Figur 3 ersichtliche Lösung in Form einer Darstellung der Automatisierungsaufgabe und der beteiligten Objekte in einer als "Sequence-Chart "-Diagramm bezeichneten Darstellung. Die Darstellung zeigt in einfachster Ausgestaltung zunächst die beteiligten Objekte 1, 2 und 3 in einer übersichtlichen Anordnung sowie zwei mögliche Objektinteraktionen, nämlich die Anlieferung eines Outputs der Maschine 1 auf das Förderband 2 sowie auch eine Anlieferung der Maschine 1 auf das Förderband 3. Die Anlieferung eines Outputs von der Maschine 1 auf das Förderband 2 ist mit einem ersten Pfeil 5 und die Anlieferung der Maschine 1 auf das zweite Förderband 3 mit einem zweiten Pfeil 6 bezeichnet. Dabei wird aus der Anordnung des ersten Pfeils 5 über dem zweiten Pfeil 6 deutlich, dass die Belieferung des ersten Förderbands 2 zeitlich vor der Belieferung des zweiten Förderbands 3 erfolgt. Durch eine entsprechende Dimensionierung einer in Figur 3 nicht weiter dargestellten Ordinate kann sogar der genaue zeitliche Abstand zwischen der ersten Objektinteraktion 5 und der zweiten Objektinteraktion 6 aus dem Diagramm abgelesen werden.

Die Adressierung der Aufrufe bzw. Objektinteraktionen 5 und 6 und deren zeitliche Abfolge wird von dem in Figur 3 nicht weiter dargestellten Koordinierungselement 4 übernommen.

Programmtechnisch ist die Darstellung Figur 3 so zu verstehen, dass die Objekte 1, 2 und 3 jeweils als Programmmodule realisiert sind, wobei diese Objekte in einer einzigen Darstellung zur Verschaltung angeboten werden. Die konkrete Verschaltung der Schnittstellen zwischen den Objekten 1, 2 und 3 muss den Anwender nicht weiter beschäftigen.

Sie wird entweder durch das in dieser Darstellung nicht sichtbare Koordinierungselement 4 übernommen oder mit einer ersten werkseitigen Parametrierung des oder der programmierbaren Steuergeräts oder -geräte geliefert.

Die Objekte 1, 2, 3 können im Weiteren im Wege der in Figur 3 dargestellten grafischen Sprachapplikation beliebig miteinander verschaltet werden. Dabei stellt die Verschaltung der Objekte 1, 2, 3 durch Objektinteraktionen 5 oder 6 letztlich eine Programmierung der Automatisierungsaufgabe dar. Hierzu werden dem Benutzer die von der Sprachapplikation angebotenen Objektinteraktionen 5 oder 6 sowie die zu verschaltenden oder an dem technischen Prozess beteiligten Objekte 1, 2 oder 3 angeboten. Dies kann gegebenenfalls in einem entsprechenden Kontextmenü erfolgen.

Die in Figur 3 dargestellte grafische Sprachapplikation bietet eine Reihe weiterer wertvoller Objektinteraktionen zur Verschaltung der Objekte 1, 2 oder 3 an, von denen eine mögliche Auswahl in Figur 4 zusammenfassend dargestellt ist. Hierzu ist selbstredend anzumerken, dass die hier gewählten Darstellungen der Objekte und Objektinteraktionen nur eine von mehreren Möglichkeiten zur Objektdarstellung zeigen und die gezeigte Auswahl unterschiedlicher Möglichkeiten nicht abschließend zu verstehen ist. In alternativer Ausgestaltung können auch andere Symbole, Farben oder 3-D-Effekte genutzt werden. Gemäß der Darstellung in Figur 4 können die Objekte 1, 2 oder 3 wie folgt geschaltet werden:

Zunächst stellt die Objektinteraktion 7 eine Programmverzweigung dar. Der Aufruf des Objektes 1 wird in Abhängigkeit von der Überprüfung der Bedingung a > b entweder an das Objekt 2 oder an das Objekt 3 adressiert. Dabei erfolgt die Überprüfung der Bedingung durch das in Figur 4 nicht dargestellte Koordinierungselement 4. Selbstverständlich kann eine derartige Verzweigung auch unbedingt angelegt werden.

In der Automatisierungstechnik sind auch Parallelprozesse zu beherrschen. Eine mögliche Programmierung derartiger Parallelprozesse kann gemäß der Objektinteraktion 10 erfolgen. Dabei wird der Aufruf des Objektes 1 durch die Parallelschaltung 10 sowohl an Objekt 2 und 3 übermittelt. Im vorstehenden Falle handelt es sich dabei sogar um eine gleichzeitige Übermittlung, die sich durch eine entsprechend sinnhafte Darstellung auf der von oben nach unten verlaufenden Zeitachse niederschlägt.

Ein weiteres wertvolles Interaktionssymbol stellt die Synchronisationsschaltung 11 dar. Hierunter ist zu verstehen, dass der Aufruf des Objektes 3 erst erfolgt, wenn sowohl ein Aufruf vom Objekt 1 wie auch vom Objekt 2 vorliegt. Erst beim gleichzeitigen Vorliegen zweier noch nicht abgearbeiteter Aufrufe der erwähnten Objekte 1 und 2 erfolgt die Adressierung eines Aufrufs an das Objekt 3.

Schließlich zeigt Figur 4 die hilfreiche Objektinteraktion einer Schleife bzw. eines Sprungs 12. Hierunter ist zu verstehen, dass die innerhalb der strichpunktierten Linie angeordneten Objektinteraktionen so oft wiederholt werden, bis ein Schleifenzähler den vorgebbaren Wert erreicht oder eine definierte Bedingung erfüllt ist. Der Schleifenzähler und/oder der Eintritt der Bedingung wird dabei vom Koordinierungselement 4 überwacht.

Vorstehend ist somit ein Programmierwerkzeug und ein Verfahren zur Programmierung, insbesondere von programmierbaren Steuergeräten, wie sie in der Automatisierungstechnik eingesetzt werden, beschrieben. Durch eine neuartige grafische Sprachapplikation können Objekte und deren Interaktionen in einer gemeinsamen Darstellung zusammengefasst, angeordnet und programmiert werden. Hierdurch ist die Programmierung, insbesondere komplexer Automatisierungsaufgaben sowie deren Überwachung, erheblich erleichtert.

## Patentansprüche

1. Programmierwerkzeug zur Erstellung und/oder Visualisierung von Programmen zur Steuerung des Ablaufs eines technischen Prozesses mittels einer grafischen Sprachapplikation zum Ablauf in einem oder mehreren, insbesondere verteilt angeordneten speicherprogrammierbaren Steuergerät oder -geräten zur gleichzeitigen Darstellung eines zeitlichen Ablaufs und einer Interaktion der an der Steuerung des technischen Prozesses beteiligten Objekte (1, 2 oder 3) in einem Diagramm auf einer Anzeigevorrichtung,
**dadurch gekennzeichnet, dass** ein zusätzliches Koordinierungselement (4) vorgesehen ist, das den zeitlichen Ablauf und die Objektinteraktion der beteiligten Objekte **dadurch** verwaltet, dass die Adressierung der Objekte untereinander wie auch deren zeitliche Abfolge vorgegeben wird und hierzu, zumindest sämtliche Meldungen und Aufrufe eines Objektes zunächst an das Koordinierungselement (4) übermittelt werden.

2. Programmierwerkzeug nach Anspruch 1, **dadurch gekennzeichnet, dass** als Koordinierungselement (4) ein virtueller oder realer zusätzlicher Prozessor in Verbindung mit dem oder den speicherprogrammierbaren Steuergerät oder -geräten vorgesehen ist.

3. Programmierwerkzeug nach Anspruch 1 oder 2, **dadurch gekennzeichnet, dass** zumindest im Wesentlichen alle Aufrufe der Objekte (1, 2 oder 3) über das Koordinierungselement (4) laufen und dieses Koordinierungselement (4) den Zeitpunkt eines jeden Aufrufs und/oder den Adressaten eines jeden Aufrufs bestimmt.

4. Programmierwerkzeug nach einem der vorhergehenden Ansprüche, **dadurch gekennzeichnet, dass** die grafische Sprachapplikation jeweils eine grafische Darstellung aller Objekte (1, 2 oder 3) und aller Objektinteraktionen (5 bis 12) umfasst, die mittels eines Editors zur Implementierung eines lauffähigen Programms kombinierbar sind.

5. Programmierwerkzeug nach Anspruch 4, **dadurch gekennzeichnet, dass** jeder grafischen Darstellung eines Objektes und einer Objektinteraktion ein Befehl oder ein Programmmodul zugeordnet ist.

6. Programmierwerkzeug nach Anspruch 4 oder 5, **dadurch gekennzeichnet, dass** zusätzliche Objektinteraktionen
- Verzweigung (7) eines Objektaufrufs
- Parallelschaltung (10) eines Objektaufrufs
- Synchronisationsschaltung (11) von wenigstens zwei Interaktionen oder
- Schleife bzw. Sprung (12) zur Wiederholung eines Befehls und/oder Programmabschnitts
jeweils bedingt oder unbedingt in dem gemeinsamen Diagramm darstellbar und hierdurch entsprechend implementierbar sind.

7. Programmierwerkzeug nach einem der vorhergehenden Ansprüche, **dadurch gekennzeichnet, dass** in dem zweidimensionalen grafischen Diagramm auf einer Anzeigevorrichtung in der Abszisse oder X-Achse die Objektinteraktionen (5 bis 12) und in der Ordinate oder Y-Achse des Diagramms der Zeitablauf der Objektinteraktionen (5 bis 12) dargestellt sind.

8. Programmierwerkzeug nach Anspruch 7, **dadurch gekennzeichnet, dass** die grafische Darstellung der Sprachapplikation in einem Diagramm echtzeitfähig ist.

9. Programmierwerkzeug nach Anspruch 8, **dadurch gekennzeichnet, dass** der Anzeigevorrichtung ein Pufferspeicher zur gepufferten Darstellung des Ablaufs eines Prozesses mittels der grafischen Sprachapplikation zugewiesen ist.

10. Programmierwerkzeug nach einem der Ansprüche 7 bis 9, **dadurch gekennzeichnet, dass** als Diagramm eine "Sequence-Chart-Darstellung" ausgewählt ist.

11. Verfahren zur Programmierung und Darstellung eines Programmlaufs zur Steuerung und/oder Regelung eines technischen Prozesses mittels eines oder mehreren programmierbaren Steuergerätes oder -geräten, bei dem mittels einer grafischen Sprachapplikation ein in Objekten und deren Interaktion darstellbarer Prozess in folgenden Schritten implementiert wird:
- Aufruf der an dem Prozess beteiligten Objekte in einem gemeinsamen Diagramm,
- Aufruf der jeweils benötigten Objektinteraktionen in diesem gemeinsamen Diagramm,
- Edition der ausgewählten Objekte und Interaktionen sowie deren zeitliche Abfolge in dieser Darstellung und
- Übersetzung des vorstehend implementierten Programms in eine korrespondierende Hochsprache und/oder Maschinensprache,
- wobei im Rahmen dieser Edition die Objekte und deren Interaktion in der X-Achse oder Abszisse eines zweidimensionalen Diagramms angeordnet werden und deren zeitlicher Ablauf nacheinander durch Anordnung der Interaktion von oben nach unten in der Y-Achse oder Ordinate dieses Diagramms auf einer Anzeigevorrichtung dargestellt werden.

## Claims

1. Programming tool for creating and/or visualising programs to control the sequence of a technical process using a graphic voice application for execution in one or more programmable logic controllers, especially arranged in distributed fashion, for simultaneous display in a diagram, on a display device, of a sequence over time and an interaction of the objects (1, 2 or 3) involved in the control of the technical process, **characterised in that** an additional coordination element (4) is provided which administers the sequence over time and the object interaction of the objects involved, **in that** the addressing of the objects among one another as well as their sequence over time is predefined and to this end at least all messages and calls of an object are initially transferred to the coordination element (4)

2. Programming tool according to claim 1, **characterised in that** a virtual or a real additional processor is provided as a coordination element (4) in combination with the programmable logic controller(s).

3. Programming tool according to claim 1 or 2, **characterised in that** at least substantially all calls of the objects (1, 2 or 3) run via the coordination element (4) and this coordination element (4) determines the time of every call and/or the addressee of every call.

4. Programming tool according to one of the preceding claims, **characterised in that** the graphic voice application in each case includes a graphic display of all objects (1, 2 or 3) and of all object interactions (5 to 12), which can be combined using an editor for implementing an executable program.

5. Programming tool according to claim 4, **characterised in that** a command or a program module is associated with every graphic display of an object and of an object interaction.

6. Programming tool according to claim 4 or 5, **characterised in that** additional object interactions
- branching (7) of an object call
- parallel switching (10) of an object call
- synchronisation switching (11) of at least two interactions or
- loop or jump (12) to repeat a command and/or program section
can in each case be displayed conditionally or unconditionally in a common diagram and as a result can be implemented accordingly.

7. Programming tool according to one of the preceding claims, **characterised in that** the object interactions (5 to 12) are displayed in the two-dimensional graphic diagram on a display device in the abscissa or x-axis and the sequence over time of the object interactions (5 to 12) in the ordinate or y-axis of the diagram.

8. Programming tool according to claim 7, **characterised in that** the graphic display of the voice application in a diagram is possible in real time.

9. Programming tool according to claim 8, **characterised in that** the display device is associated with a buffer memory for buffered display of the sequence of a process by means of the graphic voice application.

10. Programming tool according to one of the claims 7 to 9, **characterised in that** a "sequence chart display" is selected as a diagram.

11. Method for programming and displaying a program run for open-loop and/or closed-loop control of a technical process using one or more programmable logic controllers, wherein a process that can be displayed in objects and interaction thereof is implemented in the following steps using a graphic voice application:
- calling the objects involved in a process in a common diagram,
- calling the object interactions required in each case in this common diagram,
- editing the selected objects and interactions as well as their sequence over time in this display and
- translating the program implemented above into a corresponding high-level language and/or machine language,
- wherein in the context of this editing the objects and the interaction thereof are arranged in the x-axis or abscissa of a two-dimensional diagram and their sequence over time is displayed successively by arranging the interaction from top to bottom in the y-axis or ordinate of this diagram on a display device.

## Revendications

1. Outil de programmation pour l'élaboration et/ou la visualisation de programmes de commande du déroulement d'un processus technique au moyen d'une application vocale graphique pour le passage dans un automate programmable ou dans plusieurs automates programmables, notamment répartis pour la représentation simultanée d'un déroulement dans le temps et d'une interaction des objets ( 1, 2 ou 3 ) participant à la commande du processus technique dans un diagramme sur un dispositif d'affichage,
**caractérisé en ce qu'**il est prévu un élément ( 4 ) supplémentaire de coordination, qui gère le déroulement dans le temps et l'interaction objet des objets participant de sorte que l'adressage des objets entre eux ainsi que leur succession dans le temps sont prescrits et, à cet effet, au moins l'ensemble des messages et des appels d'un objet sont transmis d'abord à l'élément ( 4 ) de coordination.

2. Outil de programmation suivant la revendication 1, **caractérisé en ce qu'**il est prévu comme élément ( 4 ) de coordination un processeur virtuel ou réel supplémentaire en liaison avec l'automate programmable ou les automates programmables.

3. Outil de programmation suivant la revendication 1 ou 2, **caractérisé en ce que** au moins essentiellement tous les appels des objets ( 1, 2 ou 3 ) passent par l'élément ( 4 ) de coordination et cet élément ( 4 ) de coordination détermine l'instant de chaque appel et/ou les adresses de chaque appel.

4. Outil de programmation suivant l'une des revendications précédentes, **caractérisé en ce que** l'application vocale graphique comprend respectivement une représentation graphique de tous les objets ( 1, 2 ou 3 ) et de toutes les interactions ( 5 à 12 ) d'objets qui peuvent être combinés au moyen d'un éditeur pour la mise en oeuvre d'un programme pouvant être exécuté.

5. Outil de programmation suivant la revendication 4, **caractérisé en ce qu'**une instruction ou un module de programme est associé à chaque représentation graphique d'un objet ou d'une interaction d'objets.

6. Outil de programmation suivant la revendication 4 ou 5, **caractérisé en ce que** peuvent être représentées respectivement, sous condition ou sans condition, dans un diagramme commun et ainsi être mis en oeuvre de façon correspondante des interactions d'objets supplémentaires
- branchement d'un appel d'objet
- circuit ( 10 ) parallèle d'un appel d'objet
- circuit ( 11 ) de synchronisation d'au moins deux interactions ou
- boucle ou saut ( 12 ) de répétition d'une instruction et/ou d'une partie de programme.

7. Outil de programmation suivant l'une des revendications précédentes, **caractérisé en ce que** dans le diagramme graphique à deux dimensions sont représentées sur un dispositif d'affichage en abscisses ou sur l'axe des X les interactions ( 5 à 12 ) d'objets et en ordonnées ou sur l'axe des Y du diaphragme le déroulement dans le temps des interactions ( 5 à 12 ) d'objets.

8. outil de programmation suivant la revendication 7, **caractérisé en ce que** la représentation graphique de l'application vocale peut être en temps réel dans un diagramme.

9. Outil de programmation suivant la revendication 8, **caractérisé en ce qu'**au dispositif d'affichage est affectée une mémoire tampon pour la représentation en tampon du déroulement d'un processus au moyen de l'application vocale graphique.

10. Outil de programmation suivant l'une des revendications 7 à 9, **caractérisé en ce qu'**il est choisi comme diagramme une représentation « séquence-chart ».

11. Procédé de programmation et de représentation d'un déroulement de programme pour commander /ou réguler un processus technique au moyen d'un automate programmable ou de plusieurs automates programmables, dans lequel on met en oeuvre dans les stades suivants au moyen d'une application vocale graphique un processus pouvant être représenté en objets et en leurs interactions :
- appel des objets participant au processus dans un diagramme commun,
- appel des interactions d'objets nécessaires respectivement dans ce diagramme commun,
- édition des objets et des interactions sélectionnés ainsi que de leur succession dans le temps dans cette représentation, et
- traduction du programme mis en oeuvre précédent dans un langage évolué et/ou dans un langage machine,
- dans lequel, dans le cadre de cette édition, les objets et leurs interactions sont disposés sur l'axe des X ou en abscisses d'un diagramme en deux dimensions et leur déroulement dans le temps les uns après les autres sont représentés en disposant les interactions de haut en bas sur l'axe des Y ou en ordonnées de ce diagramme sur un dispositif d'affichage.
